Europäisches Patentamt

European Patent Office

Office européen des brevets

(11) Veröffentlichungsnummer: **0 146 706**
**B1**

(12) **EUROPÄISCHE PATENTSCHRIFT**

(45) Veröffentlichungstag der Patentschrift:
09.12.87

(21) Anmeldenummer: 84112141.1

(22) Anmeldetag: 10.10.84

(51) Int. Cl.⁴: **F 16 B 5/00,** F 16 B 9/02,
B 61 D 17/18, B 60 R 13/02

(54) **Verbindung zwischen Verkleidungselementen und einem Kastengerippe eines Fahrzeugs.**

(30) Priorität: 13.12.83 DE 3344995

(43) Veröffentlichungstag der Anmeldung:
03.07.85 Patentblatt 85/27

(45) Bekanntmachung des Hinweises auf die Patenterteilung:
09.12.87 Patentblatt 87/50

(84) Benannte Vertragsstaaten:
AT BE CH DE FR GB IT LI SE

(56) Entgegenhaltungen:
AT - B - 321 979
DE - A - 3 100 270
DE - C - 719 496
FR - A - 1 486 809

(73) Patentinhaber: **Messerschmitt-Bölkow-Blohm
Gesellschaft mit beschränkter Haftung,
Robert-Koch-Strasse, D-8012 Ottobrunn (DE)**

(72) Erfinder: **Liepert, Meinrad, B.-Monath-Strasse 8a,
D-8901 Meitingen (DE)**
Erfinder: **Klapper, Helmut, Heckenrosenstrasse 7,
D-8850 Donauwörth (DE)**
Erfinder: **Bönisch, Manfred, Pyrkstockstrasse 20,
D-8850 Donauwörth (DE)**

**Beschreibung**

Die Erfindung bezieht sich auf eine Verbindung zwischen Verkleidungselementen und einem Kastengerippe eines Fahrzeugs gemäss dem Oberbegriff des Patentanspruchs 1.

Innenräume von Eisenbahnwagen, Flugzeugzellen, Bussen, allgemein von Fahrzeugen, die ein tragendes Kastengerippe aufweisen, werden üblicherweise mit Verkleidungselementen ausgekleidet und ggf. mit derartigen Elementen in Abteile unterteilt. Zu den Verkleidungselementen zählen z.B. Wand- und Deckenverkleidungen sowie Unterteilungswände zur Abteilunterteilung in Eisenbahnwagen.

Bei Eisenbahnwagen werden Wand- und Deckenverkleidungen sowie andere Verkleidungselemente über Futterhölzer oder direkt mit der tragenden Struktur des Kastengerippes verschraubt. Der Toleranzausgleich erfolgt durch Anpassen einer Vielzahl von Futterhölzern. Zwischen Kastengerippe und Verkleidungselementen werden aus Gründen einer gewissen Schalldämmung und einer Schwingungsentkopplung zwischen Kastengerippe und Verkleidungselementen Streifen aus Kunststoff, Filz oder Elastomeren aufgeklebt.

Die Stossfugen der Wand- und Deckenverkleidungselemente werden mit Leisten aus Kunststoff oder Aluminium abgedeckt, wobei die Leisten üblicherweise verschraubt oder in Ausnahmefällen verklebt werden.

Die direkte Befestigung der Verkleidungselemente mit dem Kastengerippe ggf. über Futterhölzer und Abdeckleisten ist aufwendig, da entsprechend der Toleranzen des Kastengerippes alle Verkleidungselemente einzeln eingepasst werden müssen. Hierfür müssen Futterhölzer und andere Leisten in unterschiedlichen Längen vorbereitet werden, die an Teilen des Kastengerippes, z.B. Säulen oder Dachspanten angeschraubt werden müssen, um die baulichen Toleranzen zwischen Kastengerippe und den Verkleidungselementen auszugleichen. Sämtliche für die Befestigung notwendigen Schraubenlöcher müssen bei der Montage einzeln gebohrt und verschraubt werden. Ausserdem müssen noch die erwähnten Zwischenlagen aus Kunststoff, Filz oder Elastomeren aufgeklebt werden. Die Stösse der Verkleidungselemente werden ebenfalls bei der Montage mit Abdeckleisten bekleidet, die jeweils angepasst werden müssen.

Alle diese Arbeiten bei der Fertigung und Montage von Verkleidungselementen, Futterhölzern und Abdeckleisten sind lohnintensiv.

Sollen die Verkleidungselemente ausgewechselt werden, so sind auch die hierfür notwendigen Arbeiten entsprechend aufwendig.

Verkleidungselemente müssen nicht nur bei Beschädigung ausgewechselt werden; vielmehr steht ein erhebliches Interesse daran, vorhandene Wagen z.B. von Eisenbahnen umzurüsten, d.h. in ihrer Raumauskleidung und Raumaufteilung zu verändern, um diese Wagen den jeweiligen neuen Anforderungen anzupassen. Eine solche Umrüstung, insbesondere eine Umrüstung bereits vorhandener Eisenbahnwagen ist durch die bisherige Befestigung von Verkleidungselementen am Kastengerippe aus wirtschaftlichen Gründen praktisch nicht möglich.

Die Verbindung von Verkleidungselementen direkt mit der tragenden Struktur des Kastengerippes oder über Futterhölzer ist ausserdem so starr, dass Körperschallschwingungen vom Kastengerippe mehr oder minder ungedämpft auf die Verkleidungselemente übertragen werden und als Luftschall in das Innere des Fahrzeuges dringen. Durch die starre Verbindung können beim Verschrauben grösserer Verkleidungselemente, z.B. Wand- und Deckenelementen, durch die Ausdehnung der verschiedenen Materialien Verformungen oder Risse entstehen.

Aus der DE-C-719 496 ist eine Innenverkleidung insbesondere für Eisenbahnwagen bekannt, bei welcher Auskleidungsschalen unter Zwischenschaltung von Leisten aus Gummi oder ähnlicher Masse an der Aussenhaut befestigt und an ihren im Wagen quer verlaufenden Rändern durch Winkelprofile verstärkt sind. Diese Profile werden über allseitig federnde Traversen in Dichtungsleisten hineingedrückt, die auf Spanten des Kastengerippes aufgeklebt sind. Die Winkelprofile sind mit dem Kastengerippe durch Punktschweissungen verbunden. Eine solche Innenverkleidung ermöglicht keine rasche Umrüstung bereits vorhandener Fahrzeuge. Ausserdem bleiben die Nachteile hinsichtlich der einzuhaltenden Toleranzen wie bei den obigen Ausführungsbeispielen erhalten.

Die Erfindung liegt die Aufgabe zugrunde, eine Befestigung der in Rede stehenden Art so zu verbessern, dass der Aufwand für die Befestigung verringert wird und dass eine Umrüstung bereits vorhandener Fahrzeuge mit neuen Verkleidungselementen einfach möglich ist. Ausserdem soll die Befestigung so ausgebildet sein, dass eine Schalldämmung zwischen Kastengerippe und Verkleidungselementen sowie ferner ein Spannungsausgleich zwischen Kastengerippe und Verkleidungselementen bei Temperaturschwankungen erreicht werden.

Diese Aufgabe ist gemäss der Erfindung durch die im kennzeichnenden Teil des Anspruchs 1 angegebenen Merkmale gelöst.

Gemäss diesen Merkmalen werden die Verkleidungselemente mit dem Kastengerippe durch eine als Verbindungselemente dienende Distanzschiene miteinander verbunden, die die Form eines Winkelprofils aufweist. Ein Schenkel des Winkelprofils ist mit Langlöchern versehen und wird mit entsprechenden Rippen oder dergleichen des Kastengerippes verschraubt. Durch die Langlöcher lassen sich wagenbauliche Toleranzen vom Kastengerippe zu den Verkleidungselementen ausgleichen.

Auf dem anderen Schenkel des Winkelprofils ist ein elastischer Überzug, z.B. ein schalldämmendes Gummiprofil aufgeklemmt oder geklebt, durch den eine Weiterleitung des Körperschalls vom Kastengerippe auf die Verkleidungselemente weitgehend verhindert wird.

Die Verkleidungselemente werden lediglich mit dem Überzug verbunden, d.h. dass deren Befestigung von dem Winkelprofil entkoppelt ist. Diese Verbindung ist so ausgestaltet, dass Körperschall vom Kastengerippe auf die Verkleidungselemente weitgehend verhindert ist. Die Verbindung zwischen Verkleidungselementen und Überzug kann eine

Schraubverbindung, eine Klemmverbindung oder gemäss einer bevorzugten Ausführungsform der Erfindung eine Verbindung mittels eines Klettverschlusses sein. Hierzu wird ein Haftband auf den Überzug des Winkelprofils geklebt oder vulkanisiert, das in ein Flauschband auf der Rückseite der Verkleidungselemente eingreift. Ein solcher Kletterschuss hat in Verbindung mit dem elastischem Überzug, vorzugsweise einem Gummiprofil, den Vorteil, dass sich die aneinanderliegenden Materialien trotz unterschiedlicher Temperaturausdehnungen bei stabiler Befestigung in horizontaler und vertikaler Richtung so bewegen können, dass keine Verbindungen oder Risse in den Verkleidungselementen auftreten.

Ein weiterer Vorteil einer Verbindung gemäss der Erfindung ist, dass Kältebrücken wegfallen. Solche Kältebrücken waren durch die bisher übliche starre Befestigung zwischen Kastengerippe und Verkleidungselementen immer ein Problem.

Durch die Verwendung von Klettverschlüssen zwischen der Distanzschiene und den Verkleidungselementen können letzere problemlos ausgewechselt werden. Hiermit ist es auch möglich, den Innenraum bereits vorhandener Fahrzeuge oder Wagen, z.B. Eisenbahnwagen neu zu gestalten, z.B. Wand- und Deckenelemente auszutauschen oder einen Eisenbahnwagen in neue Abteile aufzuteilen.

Durch Materialeinsparung, Fertigungs- und Montagezeitverkürzungen können bei der Neueinrichtung von Fahrzeugen als auch bei der Umrüstung bereits vorhandener Fahrzeuge Kosten gesenkt werden.

Weitere Ausgestaltungen der Erfindung gehen aus den Unteransprüchen hervor.

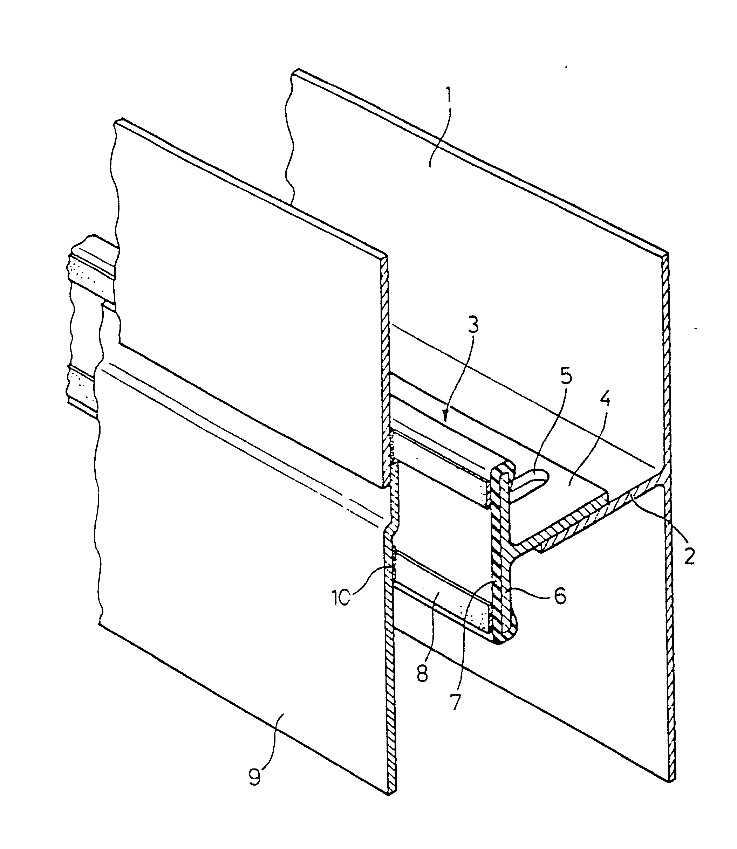

Die Erfindung ist in einem Ausführungsbeispiel anhand der einzigen Figur näher erläutert, in der eine perspektivische Schnittdarstellung einer Verbindung zwischen einem Kastengerippe und Verkleidungselementen dargestellt ist.

In der Figur ist mit 1 eine Aussenwand eines Eisenbahnwagens und mit 2 Rippen bezeichnet, die zur Versteifung der Aussenwand 1 dienen. Aussenwand 1 und Rippen 2 sind Teil des mehr oder minder starren Kastengerippes des Eisenbahnwagens, wobei sich die Rippen 2 in Richtung auf den Innenraum des Eisenbahnwagens senkrecht oder waagrecht zur Aussenwand erstrecken. Mit der Rippe 2 ist eine Distanzschiene 3 verbunden, die als längliches T-Profil ausgebildet ist. Die Distanzschiene 3 ist mit ihrem T-Schenkel 4 mit den Rippen 2 verbunden. Zum Toleranzausgleich ist der T-Schenkel 4 mit Langlöchern 5 versehen. Die Verbindung zwischen Rippen 2 und T-Schenkel 4 ist eine Schraubverbindung (nicht dargestellt).

Die Distanzschiene 3 besteht aus Aluminium oder Kunststoff.

Der andere Schenkel 6 des T-Profils der Distanzschiene 3 ist auf der dem T-Schenkel 4 abgewandten Seite mit einem Gummiprofil 7 überzogen. Dieses Gummiprofil kann, wie in der Figur angedeutet, auf die Distanzschiene 3 geklemmt werden; eine Klebverbindung ist ebenfalls möglich.

Längs der oberen und unteren Kante des Schenkels 6 des T-Profils 3 sind Haftbänder 8 für einen Klettverschluss aufgeklebt oder aufvulkanisiert.

Mit dem T-Profil 3 werden Verkleidungselemente 9, z.B. Wand- oder Deckenverkleidungselemente verbunden. Auf die dem T-Profil 3 zugewandten Innenseiten der Verkleidungselemente 9 sind Flauschbänder 10 aufgeklebt, die bei der Befestigung der Verkleidungselemente 9 auf dem T-Profil in die Haftbänder 8 angreifen. Die Verkleidungselemente 9 können als einzelne Platten ausgebildet werden, die sich in dem Bereich zwischen den Haftbändern 8 an der oberen und unteren Längskante des T-Profils überlappen. Eine Abdeckung der Überschneidungen zwischen einzelnen Verkleidungselementen ist hierbei nicht notwendig, wie aus der Figur ersichtlich.

In der Beschreibung ist als Befestigungselement ein T-Profil beschrieben worden. Anstelle eines solchen T-Profils kann ohne weiteres ein L-Profil verwendet werden. Bei einem L-Profil wäre der eine Schenkel an dem Kastengerippe befestigt, während der andere Schenkel den schalldämmenden Überzug und die Haftbänder des Klettverschlusses tragen würde.

**Patentansprüche**

1. Verbindung zwischen Verkleidungselementen (9) zur Innenverkleidung oder Abteilaufteilung und einem Kastengerippe (1) eines Fahrgeuges, insbesondere eines Einsenbahnwagens, mit Hilfe einer Schiene in Form eines Winkelprofils (3) sowie eines elastischen Überzugs (7) zwischen Verkleidungselementen und Winkelprofil, dadurch gekennzeichnet, dass ein Befestigungsschenkel (4) des Winkelprofils (3) mit Langlöchern (5) versehen und mit Teilen (2) des Kastengerippes (1) verschraubt ist, dass der andere Schenkel (6) des Winkelprofils (3) mit dem elastischen Überzug (7) versehen ist, und dass die Verkleidungselemente (9) lediglich mit diesem Überzug (7) verbunden sind.

2. Verbindung nach Anspruch 1, dadurch gekennzeichnet, dass der elastische Überzug (7) aus einem schalldämmenden Material ist.

3. Verbindung nach Anspruch 1 oder 2, dadurch gekennzeichnet, dass das Winkelprofil (3) ein T-Profil ist, dessen T-Schenkel (4) mit dem Kastengerippe (1) verbunden ist.

4. Verbindung nach einem der vorhergehenden Ansprüche, dadurch gekennzeichnet, dass der andere Schenkel (6) des Winkelprofils (3) lediglich auf der dem Befestigungschenkel (4) abgewandten Seite mit dem Überzug (7) versehen ist, und dass die Verkleidungselemente (9) auf diesem Überzug (7) befestigt sind.

5. Verbindung nach Anspruch 4, dadurch gekennzeichnet, dass die Verkleidungselemente (9) auf dem Überzug (7) mittels eines Klettverschlusses (8, 10) befestigt sind.

6. Verbindung nach einem der vorhergehenden Ansprüche, dadurch gekennzeichnet, dass das Winkelprofil (3) aus Kunststoff ist.

7. Verbindung nach einem der Ansprüche 1 bis 5, dadurch gekennzeichnet, dass das Winkelprofil (3) aus Aluminium ist.

8. Verbindung nach einem der vorhergehenden Ansprüche, dadurch gekennzeichnet, dass der Überzug (7) aus Gummi ist.

9. Verbindung nach Anspruch 8, dadurch gekennzeichnet, dass der Überzug (7) auf das Winkelprofil (3) geklebt ist.

10. Verbindung nach Anspruch 8, dadurch gekennzeichnet, dass der Überzug (7) auf das Winkelprofil (3) geklemmt ist.

## Claims

1. A connection between panelling elements (9), for interior panelling or compartment division, and bodywork (1) of a vehicle, in particular a railway carriage, by means of a rail in the form of an angle section (3) as well as of an elastic covering (7) between the panelling elements and the angle section, characterised in that one fastening limb (4) of the angle section (3) is provided with slotted holes (5) and is bolted to parts (2) of the bodywork (1), in that the other limb (6) of the angle section (3) is provided with the elastic covering (7), and in that the panelling elements (9) are connected only to this covering (7).

2. A connection according to claim 1, characterised in that the elastic covering (7) is made from a sound-deadening material.

3. A connection according to claim 1 or 2, characterised in that the angle section (3) is a T-section, the T-limb or leg (4) of which is connected to the bodywork (1).

4. A connection according to one of the preceding claims, characterised in that the other limb (6) of the angle section (3) is provided with the covering (7) only on its side remote from the fastening limb (4), and in that the panelling elements (9) are fastened to this covering (7).

5. A connection according to claim 4, characterised in that the panelling elements (9) are fastened to the covering (7) by means of a burr closure (8, 10).

6. A connection according to one of the preceding claims, characterised in that the angle section (3) is made of plastics material.

7. A connection according to one of claims 1 to 5, characterised in that the angle section (3) is made of aluminium.

8. A connection according to one of the preceding claims, characterised in that the covering (7) is made of rubber.

9. A connection according to claim 8, characterised in that the covering (7) is glued onto the angle section (3).

10. A connection according to claim 8, characterised in that the covering (7) is clamped onto the angle section (3).

## Revendications

1. Raccordement entre des éléments (9) servant à l'habillage intérieur ou à la subdivision en compartiments et une ossature de caisse (1) d'un véhicule, en particulier d'une voiture de chemin de fer, à l'aide d'une barre ayant la forme d'une cornière (3) ainsi que d'un revêtement élastique (7) entre les éléments d'habillage et la cornière, caractérisé par le fait qu'une branche de fixation (4) de la cornière (3) est munie de trous oblongs (5) et est vissée sur des parties (2) de l'ossature de caisse (1), que l'autre branche (6) de la cornière (3) est recouverte d'un revêtement élastique (7) et que les éléments d'habillage (9) sont uniquement raccordés à ce revêtement (7).

2. Raccordement selon la revendication 1, caractérisé par le fait que le revêtement élastique (7) est réalisé en un matériau insonorisant.

3. Raccordement selon la revendication 1 ou 2, caractérisé par le fait que la cornière (3) est un profilé en T dont la branche (4) est raccordée à l'ossature de caisse (1).

4. Raccordement selon l'une des revendications précédentes, caractérisé par le fait que l'autre branche (6) de la cornière (3) n'est munie d'un revêtement (7) que sur sa face tournée du côté opposé à la branche de fixation (4) et que les éléments d'habillage (9) sont fixés sur ce revêtement (7).

5. Raccordement selon la revendication 4, caractérisé par le fait que les éléments d'habillage (9) sont fixés sur le revêtement (7) au moyen d'une attache auto-agrippante (8, 10).

6. Raccordement selon l'une des revendications précédentes, caractérisé par le fait que la cornière (3) est en matière synthétique.

7. Raccordement selon l'une des revendications 1 à 5, caractérisé par le fait que la cornière (3) est en aluminium.

8. Raccordement selon l'une des revendications précédentes, caractérisé par le fait que le revêtement (7) est en caoutchouc.

9. Raccordement selon la revendication 8, caractérisé par le fait que le revêtement (7) est collé sur la cornière (3).

10. Raccordement selon la revendication 8, caractérisé par le fait que le revêtement (7) est fixé par serrage sur la cornière (3).